**Europäisches Patentamt**

**European Patent Office**

**Office européen des brevets**

(19)

(11) Veröffentlichungsnummer : **0 349 792 B1**

(12) # EUROPÄISCHE PATENTSCHRIFT

(45) Veröffentlichungstag der Patentschrift :
**07.10.92 Patentblatt 92/41**

(51) Int. Cl.⁵ : **G01D 5/244**

(21) Anmeldenummer : **89110456.4**

(22) Anmeldetag : **09.06.89**

(54) **Positionslesesystem für über 360o verschwenkbare Werkzeugmaschinenteile.**

(30) Priorität : **07.07.88 CH 2596/88**

(43) Veröffentlichungstag der Anmeldung :
**10.01.90 Patentblatt 90/02**

(45) Bekanntmachung des Hinweises auf die
Patenterteilung :
**07.10.92 Patentblatt 92/41**

(84) Benannte Vertragsstaaten :
**BE CH DE FR GB IT LI SE**

(56) Entgegenhaltungen :
**DE-A- 2 403 854**
**DE-A- 2 546 521**
**GB-A- 2 086 568**

(56) Entgegenhaltungen :
**PATENT ABSTRACTS OF JAPAN, Band 9, Nr.**
**109 (P-355)[1832], 14. Mai 1985, Seite 14 P 355;**
**& JP-A-59 230 111 (NIPPON DENSOK.K.) 24-**
**12-1984**

(73) Patentinhaber : **Oerlikon Geartec AG**
**Birchstrasse 155**
**CH-8050 Zürich (CH)**

(72) Erfinder : **Stadtfeld, Hermann, Dr.**
**Altmoosstrasse 21**
**CH-8157 Dielsdorf (CH)**

(74) Vertreter : **Hunziker, Kurt**
**Oerlikon-Contraves AG Schaffhauserstrasse**
**580**
**CH-8052 Zürich (CH)**

EP 0 349 792 B1

## Beschreibung

Die Erfindung bezieht sich auf eine Positionslesevorrichtung für drehbare Maschinenteile nach dem Oberbegriff des Patentanspruches 1.

Bekannte elektronische Digital-Massstabsysteme enthalten eine Massstab-, Lese- und Anzeigeeinheit, wobei die Massstabeinheit als Längenmassstab ausgebildet ist und ein magnetisiertes Massstabband enthält. Ein solches Massstabsystem ist beispielsweise das "Electronic Measuring System DIGIRULER" der Firma Sony Magnescale Inc. Tokio, Japan. Die Verwendung eines solchen Systems als Positionslesesystem für Drehungen über 360°, beispielsweise zur Bestimmung der Position von verschwenkbaren Maschinenteilen in Werkzeugmaschinen, stösst auf Schwierigkeiten, weil das beispielsweise an einer Trommel oder Scheibe anzubringende Massstabband eine Fuge aufweist, welche beim Überfahren der Leseeinheit ein nichtdefiniertes Signal auslöst, wodurch die Orientierung bzw. die Istposition verloren geht.

Ferner ist aus der DE-A-2 403 854 ein Rotor für einen induktiven Messfühler zur Erfassung der Bewegung eines drehbaren Teiles, beispielsweise einer Radnabe, bekannt, wobei an einem Umfang des drehbaren Maschinenteils ein Massstabband angebracht ist, welches eine quer zur Massstabeinteilung verlaufende Fuge aufweist, die durch ein dehnbares Verbindungselement überbrückt ist. Das dadurch pro Umdrehung entstehende Fehlsignal wird in einer nachgeschalteten Auswerteschaltung eliminiert. Als Positionslesegerät für Verschwenkungen von mindestens 360° ist diese Vorrichtung aufgrund des Fehlsignales nicht geeignet.

Die Erfindung, wie sie in den Ansprüchen gekennzeichnet ist, löst die Aufgabe, eine Positionslesevorrichtung für drehbare Maschinenteile zu schaffen, welche die Istposition unbeeinflusst von Fugen in der Massstabeinheit anzeigt.

Die durch die Erfindung erreichten Vorteile sind im wesentlichen darin zu sehen, dass bekannte für Längenmessungen ausgebildete Massstabsysteme auch für Positionsbestimmungen bei Drehungen über 360° mit entsprechenden Anpassungen einsetzbar sind.

Nachfolgend wird anhand von Zeichnungen ein Ausführungsbeispiel der Erfindung erläutert:

Es zeigen:

Fig.1 den Aufbau eines bekannten Magnetmassstabsystems zum Lesen von Längenpositionen in schematischer Darstellung;

Fig.2 den Aufbau eines erfindungsgemässen Positionslesesystems für über 360° verschwenkbare Maschinenteile in schematischer Darstellung.

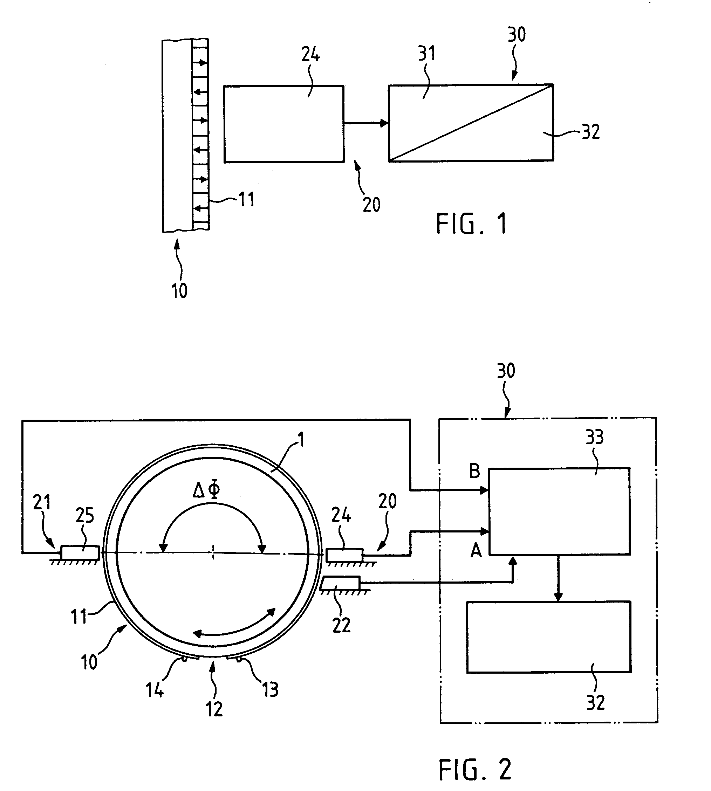

Gemäss Fig.1 enthält ein bekanntes elektronisches Digital-Magnetmassstabsystem eine Massstabeinheit 10, eine Leseeinheit 20 und eine Auswerteeinheit 30, auch Anzeigeeinheit genannt. Die Massstabeinheit 10 enthält einen Magnetmassstab 11, welcher aus einem Material mit hohem magnetischem Widerstand hergestellt ist und Massstabsignale in vorgegebenem gleichmässigen Abstand in Form von zwei Magneten mit abwechselnder Polarität aufweist. Ein Lesekopf 24 der Leseeinheit 20 ist mit einem kleinen Abstand von beispielsweise 1,5 Millimeter zum Magnetmassstab 11 anzuordnen und enthält zwei Magnetköpfe, die sinusförmige Signale erzeugen, welche zur Erkennung der Bewegungsrichtung und zur Interpolation um 90° phasenverschoben geschaltet sind. Die nachgeschaltete Auswerteeinheit 30 enthält im wesentlichen einen Detektor 31 und eine Anzeige 32.

Dieses bekannte Massstabsystem funktioniert sowohl im Stillstand wie auch bei einer Relativbewegung zwischen der Massstabeinheit 10 und der Leseeinheit 20, indem magnetische Feldstärken der Massstabsignale starke Signale in den beiden Magnetköpfen des Lesekopfes 24 induzieren und dabei ein resultierendes Ausgangssignal an den Detektor 31 weitergeleitet und von diesem elektrisch interpoliert und in ein für die Messung und andere Steuerzwecke geeignetes Signal umgewandelt wird. Selbstverständlich enthält die Auswerteeinheit 30 Nullungs-, Referenzpunkt-und Voreinstellfunktionen sowie die Speiseschaltung. Ferner ist eine Absolutoder Inkrementalmessung wählbar.

In Fig.2 ist ein erfindungsgemässes Positionslesesystem dargestellt. Auf einer vereinfacht dargestellten und über 360° verschwenkbaren bzw. drehbaren Trommel 1, beispielsweise eine Wälztrommel einer Kegelradverzahnungsmaschine, ist eine Massstabeinheit 10, beispielsweise gemäss Fig.1, befestigt. Dabei entsteht zwischen Anfang und Ende des Magnetmassstabes 11 eine messtechnische Fuge 12, wobei es unerheblich ist, ob Anfang und Ende des Magnetmassstabes 11 direkt aneinander anliegen oder durch einen Winkel von kleiner als 180° voneinander getrennt sind. Weiter sind zwei Leseeinheiten 20 und 21 bzw. deren Leseköpfe 24 und 25 ortsfest an einer nicht dargestellten Maschine, beispielsweise der Kegelradverzahnungsmaschine, mit einem vorgegebenen Winkel $\Delta\Phi$ versetzt zueinander angeordnet. Vorzugsweise sind auf der Massstabeinheit 10 zwei Magnetmarken 13 und 14, beispielsweise beidseitig und in der Nähe der Fuge 12, und ortsfest an der Maschine ein zusätzlicher Magnetmarkenleser 22 vorgesehen. Ferner enthält die Auswerteeinheit 30 zusätzlich Auswert- und Umschaltmittel in einem Rechner 33, welcher elektrisch mit den Leseeinheiten 20 und 21, dem Magnetmarkenleser 22 und der Anzeige 32 verbunden ist.

2

Nachfolgend wird die Wirkungsweise des in Fig.2 dargestellten Positionslesesystems erläutert.

Ist beispielsweise der Lesekopf 24 positionsleseaktiv geschaltet, so liest er analog zu dem Massstabsystem gemäss Fig.1 bei Stillstand oder bei einer Drehung der Trommel 1 die vom Magnetmassstab 11 abgegebenen Signale und leitet diese an die Auswerteeinheit 30 zur Auswertung und Positionsanzeige weiter. Wenn durch eine entsprechende Drehung der Trommel 1 der Lesekopf 24 eine vorgegebene Position in der Nähe der Fuge 12 überfährt, kann dies durch den Rechner 33 der Auswerteeinheit 30 am aufsummierten Absolutwert erkannt werden. Der Rechner 33 veranlasst nun die Umschaltung von einem Eingang A auf einen Eingang B des nun im Rechner 33 integrierten Detektors und setzt simultan den noch nicht definierten Winkel des nun positionsleseaktiv werdenden Lesekopfes 25 gleich dem zuletzt gelesenen Momentanpositionswert des Lesekopfes 24, welcher nun positionsleseinaktiv wird. Bei einer Annäherung der Fuge 12 an den Lesekopf 25 erfolgt analog die Umschaltung durch den Rechner 33 vom Eingang B zurück auf den Eingang A.

Zur Vermeidung von Inkrementsignalverlusten und für Justierfunktionen ist der Einsatz von Magnetmarken vorgesehen. Solche Magnetmarken können in den Magnetmassstab 11 einmagnetisiert oder zusätzlich an der Massstabeinheit 10 befestigt werden.

Bei Verwendung von zwei Magnetmarken 13 und 14 und dem Magnetmarkenleser 22, kann durch Eichen des Systems die präzise Winkellage der beiden Marken 13 und 14 ermittelt werden. Ueberfährt die Marke 13 den Magnetmarkenleser 22, so bewirkt das Ausgangssignal des Magnetmarkenlesers 22 über den Rechner 33 die Umschaltung vom Lesekopf 24 auf den Lesekopf 25 bzw. vom Eingang A auf den Eingang B. Gleichzeitig setzt der Rechner 33 den Momentanpositionswert gleich dem Winkelwert der Marke 13. Wird die Drehung der Trommel 1 in gleicher Richtung fortgesetzt, bis die Marke 14 den Magnetmarkenleser 22 überfährt, schaltet der Rechner 33 wieder zurück auf den in der Zwischenzeit positionsleseinaktiv wirkenden Eingang A und setzt gleichzeitig den noch undefinierten Winkelwert auf den Wert der Marke 14. Damit wird der Lesekopf 24 wiederum positionsleseaktiv. Es können somit beliebig viele Umdrehungen ausgeführt werden, ohne die Genauigkeit zu verringern. Eine Drehrichtungsumkehr der Trommel 1 wird vom aktivierten Lesekopf erkannt und im Rechner 33 registriert. Bei identischen Signalen der beiden Magnetmarken 13 und 14 kann am zuletzt gelesenen Winkelwert stets erkannt werden, welche der Magnetmarken den Magnetmarkenleser 22 aktiviert.

Das erfindungsgemässe Positionslesesystem ist an sich aus bekannten Einheiten aufgebaut, wobei der Rechner 33 entsprechend den oben aufgeführten Funktionen fachmännisch zu programmieren ist.

## Patentansprüche

1. Positionslesevorrichtung für drehbare Maschinenteile mit einer Lese- (20) und Anzeigeeinheit (30), wobei an einem kreisförmigen Umfang des drehbaren Maschinenteiles eine Massstabeinheit (10) angeordnet ist, welche eine quer zur Massstabeinteilung verlaufende messtechnische Fuge aufweist, dadurch gekennzeichnet, dass eine um einen Winkel $\Delta \Phi$ zur ersten, ortsfesten Leseeinheit (20) versetzt angeordnete ortsfeste zweite Leseeinheit (21) vorhanden ist und dass die Anzeigeeinheit (30) zusätzliche Auswerte- und Umschaltmittel (33) aufweist zum Inaktivschalten derjenigen Leseeinheit, welche die Fuge überfährt und Aktivschalten der anderen Leseeinheit unter Übernahme des jeweiligen Momentanpositionswertes.

2. Positionslesevorrichtung nach Anspruch 1, dadurch gekennzeichnet, dass zusätzlich eine lesbare Marke auf der Massstabeinheit (10) angeordnet ist zur Bestimmung der Umschaltposition.

3. Positionslesevorrichtung nach Anspruch 1, dadurch gekennzeichnet, dass mindestens zwei lesbare Marken (13, 14) auf der Massstabeinheit angeordnet sind zur Bestimmung eines Fugenbereiches.

4. Positionslesesystem nach Anspruch 3, dadurch gekennzeichnet, dass ein zusätzlicher Markenleser (22) vorgesehen ist zur Bestimmung der jeweiligen Umschaltposition.

5. Positionslesesystem nach einem der Ansprüche 1 bis 4, dadurch gekennzeichnet, dass die Auswert- und Umschaltmittel einen Rechner (33) enthalten.

## Claims

1: Position-reading device for rotatable machine parts, having a reading unit (2Ø) and an indicator unit (3Ø), in which respect on a circular periphery of the rotatable machine part is arranged a scale unit (1Ø) having a metrological joint across the scale division, **characterised in that** there is a positionally fixed second reading unit (21) which is arranged offset by an angle Δ Φ relative to a first positionally fixed reading unit (2∅), and that the indicator unit (3∅) has additional evaluation and switch-over means (33) for switching inactive the reading unit which passes the joint and switching active the other reading unit whilst transferring a respective instantaneous position value.

2: Position-reading device according to claim 1, **characterised in that** additionally a readable mark is arranged on the scale unit (1∅) for determining the switch-over position.

3: Position-reading device according to claim 1, **characterised in that** at least two readable marks (13, 14) are arranged on the scale unit for determining the area of a joint.

4: Position-reading system according to claim 3, **characterised in that** an additional mark reader (22) is provided for determing a respective switch-over position.

5: Position-reading system according to one of claims 1 to 4, **characterised in that** the evaluation and switch-over means include a computer (33).

## Revendications

1°) Dispositif de lecture de position pour des éléments rotatifs de machine, comportant un module de lecture (20) et un module d'affichage (30), une périphérie circulaire de l'élément rotatif de la machine comportant un module à échelle de mesure (10) qui comporte un joint métrologique disposé transversalement à la subdivision de l'échelle de mesure, dispositif caractérisé par un second module de lecture (21) monté fixe de manière décalée d'un angle ΔΦ par rapport à un premier module de lecture (20) fixe, le module d'affichage (30) comportant des moyens complémentaires d'exploitation et de commutation (33) pour mettre au repos le module de lecture qui passe sur le joint et pour mettre en mode actif l'autre module de lecture avec transfert de la valeur instantanée de la position.

2°) Dispositif de lecture de position selon la revendication 1, caractérisé en ce qu'en plus il comporte un repère lisible sur le module d'échelle de mesure (10) pour déterminer la position de commutation.

3°) Dispositif de lecture de position selon la revendication 1, caractérisé par au moins deux repères lisibles (13, 14) prévus sur le module d'échelle de lecture pour définir une zone de jonction.

4°) Dispositif de lecture de position selon la revendication 3, caractérisé par un lecteur de repère supplémentaire (22) pour déterminer la position de commutation respective.

5°) Dispositif de lecture de position selon l'une des revendications 1 à 4, caractérisé en ce que les moyens d'exploitation et de commutation comprennent un calculateur (33).

FIG. 1

FIG. 2